# EUROPEAN PATENT SPECIFICATION

(11) **EP 4 358 349 B1**
(45) Date of publication and mention of the grant of the patent: **04.11.2026**
(21) Application number: 22823788.9
(22) Date of filing: 09.02.2022
(51) Int. Cl.: H02J 7/00, H02J 7/34, H02M 1/32, H02H 7/12, B60R 16/033, H02M 1/00, H02M 1/08, H02J 7/60

(54) **CIRCUIT FOR PREVENTING LOSS OF BATTERY VOLTAGE ON OUTPUT SIDE OF VEHICLE-MOUNTED DCDC CONVERTER**
SCHALTUNG ZUR VERHINDERUNG DES VERLUSTS DER BATTERIESPANNUNG AUF DER AUSGABESEITE EINES FAHRZEUGMONTIERTEN GLEICHSTROMWANDLERS
CIRCUIT PERMETTANT D'EMPÊCHER LA PERTE DE TENSION DE BATTERIE SUR LE CÔTÉ DE SORTIE D'UN CONVERTISSEUR CC-CC MONTÉ SUR VÉHICULE

(30) Priority: 17.06.2021 CN 202110669083
(43) Date of publication of application: 24.04.2024
(73) Proprietor: ZHEJIANG EV-TECH CO., LTD., Huzhou, Zhejiang 310012 (CN)
(72) Inventor: HU, Senjun, Huzhou, Zhejiang 310012 (CN); HAO, Shiqiang, Huzhou, Zhejiang 310012 (CN); XU, Yanwei, Huzhou, Zhejiang 310012 (CN); LI, Wenyu, Huzhou, Zhejiang 310012 (CN); SHI, Hongbo, Huzhou, Zhejiang 310012 (CN); HE, Qiang, Huzhou, Zhejiang 310012 (CN); PING, Dinggang, Huzhou, Zhejiang 310012 (CN)
(74) Representative: dompatent
(86) International application number: PCT/CN2022/075677
(87) International publication number: WO 2022/262295

(56) References cited:
- CN-A- 106 965 761
- CN-A- 111 615 247
- CN-A- 111 864 719
- CN-A- 112 769 175
- CN-A- 113 258 648
- CN-U- 209 462 249
- US-A- 5 793 189
- US-A1- 2012 105 008

## Description

### PRIORITY CLAIM

This application claims the benefit of and priority to Chinese patent Application No. 202110669083.3, filed on June 17, 2021.

### TECHNICAL FIELD

The present invention relates to a circuit for preventing battery voltage loss on the output side of an on-board DCDC converter.

### BACKGROUND

With the continuous development of electric vehicle technology, the trend of component integration is becoming more and more obvious. The solution of integration can not only bring the advantages of function expansion to the whole vehicle, but also reduce the cost of the whole vehicle through the sharing of mechanical and electronic components. The on-board charger is mainly used to draw electric power from the 220V power grid, and after power conversion, the power is charged into the high voltage battery of the electric vehicle, while the on-board DCDC converter is used to convert the energy of the high voltage battery of the electric vehicle to for example the battery energy of 12V. The integration scheme (Char Con) of the on-board charger and the on-board DCDC converter will be the mainstream scheme of energy supply for electric vehicles in the future. The reliability of the output side of the vehicle DCDC converter directly affects the safety of the vehicle because the converter is directly connected to the 12V battery of the vehicle. Nowadays, the prevention of instantaneous loss of 12V battery voltage on the output side of the on-board DCDC converter has been gradually adopted as a functional safety requirement of ASIL C in the industry. There is a need to add an additional safety mechanism with high self-check coverage to the traditional on-board DCDC converter to meet the functional safety requirement of ASIL C.

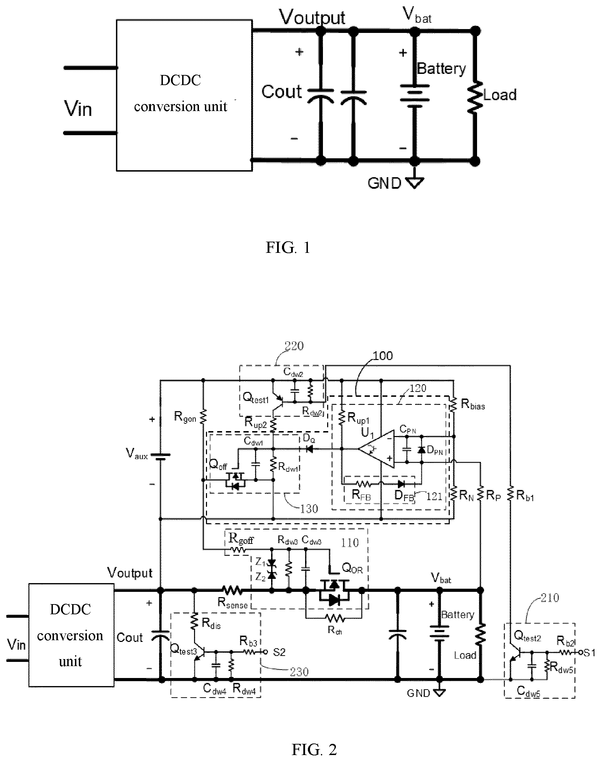

Please refer to the schematic diagram of a typical on-board DCDC converter shown in FIG. 1. As shown in FIG. 1, the on-board DCDC converter includes a DCDC conversion unit, which converts the high voltage battery power Vin to, for example, an output voltage Voutput of 12V to charge the low-voltage battery (i.e., the battery on the output side of the on-board DCDC converter). During normal operation, power is expected to transfer from the output capacitor Cout to the low-voltage battery. However, when the DCDC converter fails (for example, the failure of the internal short circuit), it will cause the current to flow back from the low-voltage battery to the inside of the DCDC converter, resulting in an instantaneous loss of the 12V battery voltage on the output side, and then affecting the driving safety of the entire vehicle.

In the prior art, the reverse cut-off characteristic of a diode is generally used to prevent current from flow back in the circuit. However, when the diode is in a forward conduction state, a certain energy loss will be caused due to the existence of a forward conduction voltage drop. In addition, electric vehicles have higher and higher requirements for the functional safety of the entire vehicle, and the traditional scheme of the reverse cut-off characteristic of a diode has been unable to meet the corresponding functional safety requirements. Therefore, the design of a circuit (anti-backflow circuit) that prevents the loss of the 12V battery voltage on the output side with high reliability, low power consumption, and high self-check coverage in the on-board DCDC converter has become a demand in the industry.

CN 209462249 U relates to the field of vehicle-mounted DC/DC converters, in particular to an output anti-backflow circuit of a vehicle-mounted DC/DC converter.

CN 111864719 A discloses an anti-reverse-connection and anti-backward-flow charging protection circuit, which comprises a control module, an anti-backward-flow module and a reverse-connection detectionmodule.

CN 111615247 A discloses an automobile driving front-end PMOS anti-backflow circuit which comprises a first anti-backflow circuit, a second anti-backflow circuit, a third anti-backflow circuit, an anti-backflow control circuit, a DCDC driving circuit and an MCU.

CN 106965761 A discloses a system power-off protection device of vehicle-mounted equipment.

US 5,793,189 A discloses an electric vehicle in which a low voltage power, obtained by conversion from a high voltage power of a main battery by a DC-DC convertor. The DC-DC converter is supplied to an operation control unit and electric equipment loads such as a lamp and is also used to charge a low voltage secondary battery, in which the main battery and the low voltage secondary battery are prevented from being over-discharged even when a main switch is left in the on-state.

US 2012/105008 A1 discloses a system including a control circuitry configured to detect a current wherein the detected current is one of a battery discharge current or a battery charging current; a first transistor configured to disconnect a load from at least one of a battery and a DC/DC converter if the battery discharge current exceeds a maximum battery discharge current setting; and a second transistor configured to adjust the charging current to maintain the charging current at or near a charge current setting.

CN 112769175 A discloses a control method and system for reducing an impact current of a charging pile. The system comprises a monitoring system and a charging module.

### SUMMARY

The invention provides a circuit for preventing battery voltage loss on the output side of an on-board DCDC converter, the on-board DCDC converter comprising an output capacitor and a low-voltage battery connected in parallel, wherein the circuit comprises: a first switch unit and a detection resistor, wherein the first switch unit includes a switch Q_{OR}, and the switch Q_{OR} and the detection resistor are connected in series between a first terminal of the output capacitor and a first terminal of the low-voltage battery; a switch control unit, wherein a first input terminal of the switch control unit is connected to the first terminal of the low-voltage battery, a second input terminal is connected to a common node of a first divider resistor unit and a second divider resistor unit, an output terminal is connected to a positive terminal of an auxiliary voltage and a control terminal of the switch Q_{OR}, the first divider resistor unit and the second divider resistor unit are connected in series between the positive terminal and a negative terminal of the auxiliary voltage, and the negative terminal of the auxiliary voltage is connected to the first terminal of the output capacitor; a first self-check unit, a second self-check unit and a third self-check unit, the first self-check unit including a switch Qₜₑₛₜ₂, wherein a first terminal of the switch Qₜₑₛₜ₂ is grounded, and a control terminal of the switch Qₜₑₛₜ₂ receives a first self-check control signal; the second self-check unit including a switch Qₜₑₛₜ₁, wherein a first terminal of the switch Qₜₑₛₜ₁ is connected to the positive terminal of the auxiliary voltage, a second terminal is connected to a detection connection terminal of the switch control unit, and a control terminal is connected to a second terminal of the switch Qₜₑₛₜ₂; and the third self-check unit including a switch Qₜₑₛₜ₃ and a discharging resistor unit, wherein the switch Qₜₑₛₜ₃ and the discharging resistor unit connected in series are connected in parallel between a positive voltage terminal and a negative voltage terminal of the output capacitor, and a control terminal of the switch Qₜₑₛₜ₃ receives a second self-check control signal.

Further, the first self-check control signal and the second self-check control signal are output by a controller; the first self-check control signal includes a high voltage level and a low voltage level, to control the switch Qₜₑₛₜ₂ to be turned on or turned off, so as to control the switch Qₜₑₛₜ₁ to be turned on or turned off; when the switch Qₜₑₛₜ₁ is turned on, the auxiliary voltage is applied to the detection connection terminal of the switch control unit; and wherein the second self-check control signal includes a high voltage level and a low voltage level to control the switch Qₜₑₛₜ₃ to be turned on or turned off.

Further, when the voltage at the first input terminal is lower than the voltage at the second input terminal, the auxiliary voltage is applied to the control terminal of the switch Q_{OR}, such that the switch Q_{OR} is kept to be turned on; when the voltage at the first input terminal is higher than or equal to the voltage at the second input terminal, the switch Q_{OR} is turned off.

Further, the switch control unit includes a comparator unit, a non-inverting input terminal of the comparator is connected to the first input terminal of the switch control unit, an inverting input terminal of the comparator is connected to the second input terminal of the switch control unit, an output terminal is connected to an anode of a diode D_{Q}, and a cathode of the diode D_{Q} is connected to the detection connection terminal of the switch control unit.

Further, the switch control unit includes a switch Q_{off}, a first terminal of the switch Q_{off} is connected to the negative terminal of the auxiliary voltage, and is connected to the cathode of the diode D_{Q} and a control terminal of the switch Q_{off} through a driving pull-down resistor, and a second terminal of the switch Q_{off} is connected to the positive terminal of the auxiliary voltage and the control terminal of the switch Q_{OR}.

Further, when there is no power flowing between the output capacitor and the low-voltage battery, or a current flows from the output capacitor to the low-voltage battery, a voltage drop generated by the detection resistor and an on-resistance of the switch Q_{OR} is applied to the non-inverting input terminal of the comparator, and the voltage at the non-inverting input terminal is zero voltage or negative voltage, and a voltage at the inverting input terminal of the comparator is a dividing voltage divided by the first divider resistor unit and the second divider resistor unit to the auxiliary voltage, thereby the voltage at the non-inverting input terminal of the comparator being less than the voltage at the inverting input terminal, the comparator outputting a low voltage level at its output terminal, the diode D_{Q} being not conducting, the switch Q_{off} being kept off, the auxiliary voltage being applied to the control terminal of the switch Q_{OR}, and the switch Q_{OR} being kept on; when the current flows from the low-voltage battery to the output capacitor, the voltage drop generated by the detection resistor and the on-resistance of the switch Q_{OR} is applied to the non-inverting input terminal of the comparator, and the voltage at the non-inverting input terminal is positive voltage, and when the voltage at the non-inverting input terminal of the comparator is larger than or equal to the voltage at the inverting input terminal of the comparator, the output terminal of the comparator outputs a high voltage level, and the diode D_{Q} is turned on, thereby the high voltage level output from the comparator being applied to the control terminal of the switch Q_{off} to enable the switch Q_{off} to be turned on, so as to control the switch Q_{OR} to be turned off.

Further, at time t0, the first self-check control signal is a high voltage level, controlling the switch Qₜₑₛₜ₂ in the first self-check unit to be turned on, increasing a voltage between the first terminal and the control terminal of the switch Qₜₑₛₜ₁ in the second self-check unit, and turn on the switch Qₜₑₛₜ₁ in the second self-check unit, and the auxiliary voltage is applied to the control terminal of the switch Q_{off} in the second switch unit to conduct the switch Q_{off}, pulling down a control signal at the control terminal of the switch Q_{OR} in the first switch unit, and turning off the switch Q_{OR} in the first switch unit; at time t1, the second self-check control signal is a high voltage level, controlling the switch Qₜₑₛₜ₃ in the third self-check unit to conduct, and the output capacitor being discharged through the discharge branch formed by the switch Qₜₑₛₜ₃ and the discharge resistor unit until time t2; at time t2, the first self-check control signal is a low voltage level, controlling the switch Qₜₑₛₜ₂ in the first self-check unit to turn off, the switch Qₜₑₛₜ₁ in the second self-check unit turning off, a voltage applied to the non-inverting input terminal of the comparator being a voltage difference between the low-voltage battery and the output capacitor, and for a voltage of the output capacitor being discharged to a sufficiently small value, the voltage difference between the low voltage battery and the output capacitor is greater than or equal to a reference voltage at the inverting input terminal of the comparator and the comparator outputs a high voltage level at its output terminal, thereby conducting the diode D_{Q}, applying a high voltage level output by the comparator to the control terminal of the switch Q_{off}, and keeping the switch Q_{off} turning on and the switch Q_{OR} turning off until the end of self-checking at time t3.

Further, the switch control unit further includes a series branch formed by a hysteresis resistor unit and a diode D_{FB}, and wherein one terminal of the hysteresis resistor unit is connected to the output terminal of the comparator, the other terminal of the hysteresis resistor unit is connected to the anode of the diode D_{FB}, and the cathode of the diode D_{FB} is connected to the non-inverting input terminal of the comparator.

Further, the first terminal of the output capacitor Cout is a positive voltage terminal, a first terminal of the low voltage battery is a positive voltage terminal, a second terminal of the output capacitor Cout is a negative voltage terminal, and a second terminal of the low voltage battery is a negative voltage terminal.

Further, the first terminal of the output capacitor Cout is a negative voltage terminal, a first terminal of the low voltage battery is a negative voltage terminal, a second terminal of the output capacitor Cout is a positive voltage terminal, and a second terminal of the low voltage battery is a positive voltage terminal.

Further, the detection resistor Rₛₑₙₛₑ is connected between the first terminal of the output capacitor Cout and the first terminal of the switch Q_{OR}.

Further, the detection resistor Rₛₑₙₛₑ is connected between the first terminal of the low voltage battery and the second terminal of the switch Q_{OR}.

Optionally, the switch Qₜₑₛₜ₂ is an NPN transistor with its first terminal being the emitter E, its second terminal being the collector C, and its control terminal being the base B; the switch Qₜₑₛₜ₁ is a PNP transistor with its first terminal being the emitter E, its second terminal being the collector C, and its control terminal being the base B; and the switch Qₜₑₛₜ₃ is a NPN transistor with its first terminal being the emitter E, its second terminal being the collector C, and its control terminal being the base B.

Further, the switch Q_{OR} is an N-type metal-oxide-semiconductor field effect transistor with its first terminal being the source S, its second terminal being the drain D, and its control terminal being the gate G. The switch Q_{off} is an N-type metal-oxide-semiconductor field effect transistor with its first terminal being the source S, its second terminal being the drain D, and its control terminal being the gate G.

### BRIEF DESCRIPTION OF THE DRAWINGS

FIG. 1 is a schematic diagram of a typical on-board DCDC converter;
FIG. 2 is a schematic diagram of a circuit for preventing battery voltage loss on the output side of an on-board DCDC converter of an embodiment of the present invention;
FIG. 3a is a schematic diagram of a first operation mode of a circuit for preventing battery voltage loss on the output side of an on-board DCDC converter of an embodiment of the present invention;
FIG. 3b is a schematic diagram of a second operation mode of a circuit for preventing battery voltage loss on the output side of an on-board DCDC converter of an embodiment of the present invention;

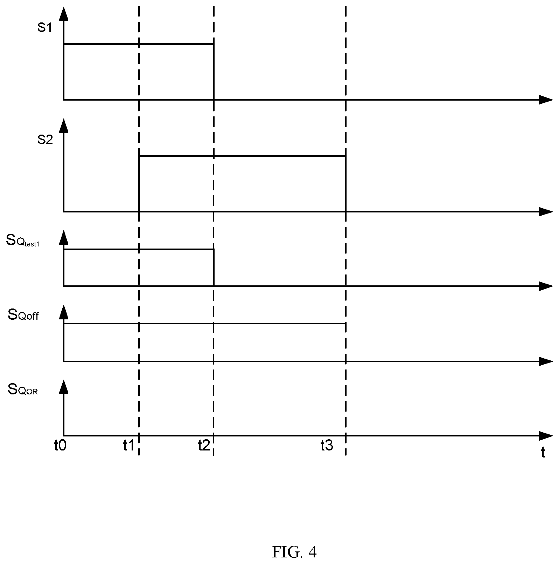

FIG. 4 a schematic diagram of a control waveform of a circuit for preventing battery voltage loss on the output side of an embodiment of the present invention;
FIG. 5 is a schematic diagram of a circuit for preventing battery voltage loss on the output side of an on-board DCDC converter of another embodiment of the present invention.

### DETAILED DESCRIPTION OF ILLUSTRATIVE EMBODIMENTS

The following describes the technical solutions in the present invention with reference to the accompanying drawings clearly and completely. Apparently, the described embodiments are merely a part rather than all of the embodiments of the present invention.

In an embodiment of the present invention, a circuit for preventing battery voltage loss on the output side of an on-board DCDC converter is provided. Specifically, please refer to a schematic diagram of a circuit for preventing battery voltage loss on the output side of an on-board DCDC converter of an embodiment of the present invention shown in FIG. 2. The on-board DCDC converter comprises a DCDC conversion unit, an output capacitor Cout and a low-voltage battery. The input terminal of the DCDC conversion unit is connected to the high-voltage battery, and the two output terminals of the DCDC conversion unit are connected to two terminals of the output capacitor Cout. The low-voltage battery is connected in parallel to two terminals of the output capacitor Cout. The DCDC conversion unit converts a voltage Vin of the high-voltage battery to an output voltage Voutput to charge the low-voltage battery. The circuit for preventing the loss of battery voltage on the output side of the on-board DCDC converter of an embodiment of the present invention comprises: a first switch unit 110 and a detection resistor Rₛₑₙₛₑ, wherein the first switch unit 110 includes a switch Q_{OR}, and the switch Q_{OR} and the detection resistor Rₛₑₙₛₑ are connected in series between a first terminal of the output capacitor Cout and a first terminal of the low-voltage battery; a switch control unit 100, wherein a first input terminal of the switch control unit 100 is connected to the first terminal of the low-voltage battery, a second input terminal is connected to a common node of a first divider resistor unit and a second divider resistor unit, an output terminal is connected to a positive terminal of an auxiliary voltage Vₐᵤₓ and a control terminal of the switch Q_{OR}, the first divider resistor unit and the second divider resistor unit are connected in series between the positive terminal and the negative terminal of the auxiliary voltage Vₐᵤₓ, and the negative terminal of the auxiliary voltage Vₐᵤₓ is connected to the first terminal of the output capacitor Cout; a first self-check unit 210 including a switch Qₜₑₛₜ₂, wherein a first terminal of the switch Qₜₑₛₜ₂ is grounded, and the control terminal receives a first self-check control signal S1; a second self-check unit 220 including a switch Qₜₑₛₜ₁, wherein a first terminal of the switch Qₜₑₛₜ₁ is connected to the positive terminal of the auxiliary voltage Vₐᵤₓ, a second terminal is connected to a detection connection terminal of the switch control unit 100, and a control terminal is connected to a second terminal of the switch Qₜₑₛₜ₂; and a third self-check unit 230 including a switch Qₜₑₛₜ₃ and a discharging resistor unit, wherein the switch Qₜₑₛₜ₃ and the discharging resistor unit connected in series are connected in parallel between a positive voltage terminal and a negative voltage terminal of the output capacitor Cout, and a control terminal of the switch Qₜₑₛₜ₃ receives a second self-check control signal S2.

The first self-check control signal S1 and the second self-check control signal S2 are output by a controller. The first self-check control signal S1 includes a high voltage level and a low voltage level, to control the switch Qₜₑₛₜ₂ to be turned on or turned off, and then to control the switch Qₜₑₛₜ₁ to be turned on or turned off. When the switch Qₜₑₛₜ₁ is turned on, the auxiliary voltage Vₐᵤₓ is applied to the detection connection terminal of the switch control unit 100. The second self-check control signal S2 includes a high voltage level and a low voltage level to control the switch Qₜₑₛₜ₃ to be turned on or turned off.

When the voltage at the first input terminal is lower than the voltage at the second input terminal, the auxiliary voltage Vₐᵤₓ is applied to the control terminal of the switch Q_{OR}, such that the switch Q_{OR} is kept to be turned on. When the voltage at the first input terminal is higher than or equal to the voltage at the second input terminal, the switch Q_{OR} is turned off.

In an embodiment, the first switch unit 110 further includes a driving resistor R_{goff}. The switch Q_{OR} includes a first terminal, a second terminal and a control terminal. The first terminal of the switch Q_{OR} is connected to the first terminal of the output capacitor Cout. The second terminal of the switch Q_{OR} is connected to the first terminal of the low-voltage battery. The first terminal of the driving resistor R_{goff} is connected to the control terminal of the switch Q_{OR}.

In an embodiment, the switch control unit 100 includes a comparator unit 120. The comparator unit 120 includes a comparator U₁. The comparator U₁ includes a non-inverting input terminal, an inverting input terminal and an output terminal. The non-inverting input terminal of the comparator is connected to the first input terminal of the switch control unit 100. The inverting input terminal is connected to the second input terminal of the switch control unit 100. The output terminal is connected to an anode of a diode D_{Q}. A cathode of the diode D_{Q} is connected to the detection connection terminal of the switch control unit 100.

In an embodiment, the switch control unit 100 includes a second switch unit 130. The second switch unit 130 includes a switch Q_{off}. The switch Q_{off} includes a first terminal, a second terminal and a control terminal. The first terminal of Q_{off} is connected to the negative terminal of the auxiliary voltage Vₐᵤₓ, and is connected to the cathode of the diode D_{Q} and the control terminal of the switch Q_{off} through a driving pull-down resistor R_{dw1}. The second terminal of the switch Q_{off} is connected to the positive terminal of the auxiliary voltage Vₐᵤₓ and the control terminal of the switch Q_{OR}, or can be connected to the second terminal of the driving resistor R_{goff}.

The switch Qₜₑₛₜ₂ in the first self-check unit 210 includes a first terminal, a second terminal and a control terminal. The first terminal of the switch Qₜₑₛₜ₂ is grounded, and the control terminal of the switch Qₜₑₛₜ₂ receives a self-check control signal S1 from the controller.

The switch Qₜₑₛₜ₁ in the second self-check unit 220 includes a first terminal, a second terminal and a control terminal. The first terminal of the switch Qₜₑₛₜ₁ is connected to the positive terminal of the auxiliary voltage Vₐᵤₓ, the second terminal of the switch Qₜₑₛₜ₁ is connected to the cathode of the diode D_{Q}, and the control terminal of the switch Qₜₑₛₜ₁ is connected to the second terminal of the switch Qₜₑₛₜ₂.

The switch Qₜₑₛₜ₃ in the third self-check unit 230 includes a first terminal, a second terminal and a control terminal. The first terminal of the switch Qₜₑₛₜ₃ is connected to the negative voltage terminal of the output capacitor Cout, the second terminal of the switch Qₜₑₛₜ₃ is connected to the positive voltage terminal of the output capacitor Cout, and the control terminal receives the second self-check control signal S2 from the controller. The discharging resistor unit is connected between the positive voltage terminal of the output capacitor Cout and the second terminal of the switch Qₜₑₛₜ₃ or connected between the negative voltage terminal of the output capacitor Cout and the first terminal of the switch Qₜₑₛₜ₃, wherein the discharging resistor unit is the discharging resistor R_{dis} in FIG. 2.

In an embodiment, the diode D_{Q} is a separate diode device, or can be a body diode of a device, such as the body diode of a metal-oxide-semiconductor field effect transistor (MOSFET).

In an embodiment, as shown in FIG. 2, the switch Qₜₑₛₜ₂ is an NPN transistor, wherein the first terminal is the emitter E, the second terminal is the collector C, and the control terminal is the base B. In an embodiment, the switch Qₜₑₛₜ₂ can be a metal-oxide-semiconductor field effect transistor (MOSFET), wherein the first terminal is the source S, the second terminal is the drain D, and the control terminal is the gate G.

In an embodiment, as shown in FIG. 2, the switch Qₜₑₛₜ₁ is a PNP transistor, wherein the first terminal is the emitter E, the second terminal is the collector C, and the control terminal is the base B. In an embodiment, the switch Qₜₑₛₜ₁ can be a metal-oxide-semiconductor field effect transistor (MOSFET), wherein the first terminal is the source S, the second terminal is the drain D, and the control terminal is the gate G.

In an embodiment, as shown in FIG. 2, the switch Qₜₑₛₜ₃ is an NPN transistor, wherein the first terminal is the emitter E, the second terminal is the collector C, and the control terminal is the base B. In an embodiment, the switch Qₜₑₛₜ₃ can be a metal-oxide-semiconductor field effect transistor (MOSFET), wherein the first terminal is the source S, the second terminal is the drain D, and the control terminal is the gate G.

In an embodiment, as shown in FIG. 2, the switch Q_{off} in the second switch unit 130 is an N-type metal-oxide-semiconductor field effect transistor (MOSFET), wherein the first terminal is the source S, the second terminal is the drain D, and the control terminal is the gate G. It can also be other switching devices, such as P-type metal-oxide-semiconductor field effect transistors (MOSFETs) or triodes.

In an embodiment, as shown in FIG. 2, the switch Q_{OR} in the first switch unit 110 is an N-type metal-oxide-semiconductor field effect transistor (MOSFET), wherein the first terminal is the source S, the second terminal is the drain D, and the control terminal is the gate G. It can also be other switching devices, such as P-type metal-oxide-semiconductor field effect transistors (MOSFETs) or triodes.

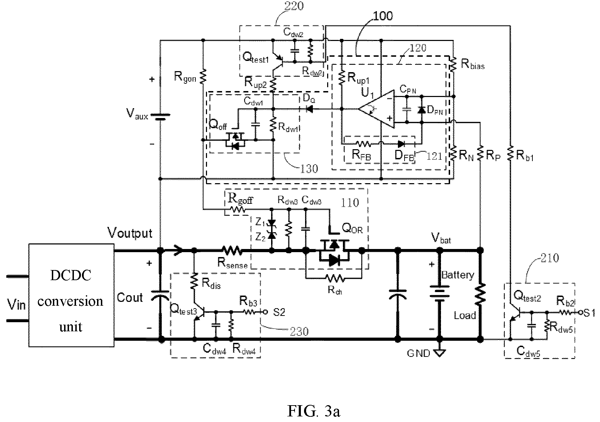

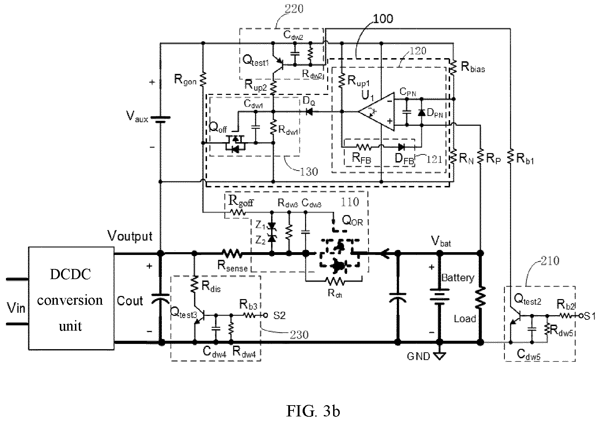

Take the switch Q_{OR} and Q_{off} as N-type metal-oxide-semiconductor field effect transistors, the switch Qₜₑₛₜ₂ as an NPN transistor, the switch Qₜₑₛₜ₁ as a PNP transistor, and the switch Qₜₑₛₜ₃ as an NPN transistor for example. When the on-board DCDC converter is operating normally, there is no power flowing between the output capacitor Cout and the low-voltage battery, or the current flows from the output capacitor Cout to the low-voltage battery. Please refer to the schematic diagram of a first operation mode of a circuit for preventing battery voltage loss on the output side of an on-board DCDC converter of an embodiment of the present invention as shown in FIG. 3a, wherein the current flows in the direction of the arrow, or there is no current flow. Then, the voltage drop generated by the detection resistor Rₛₑₙₛₑ and the on-resistance R_{ds_ON} of the switch Q_{OR} is applied to the non-inverting input terminal of the comparator U₁, and the voltage at the non-inverting input terminal is zero voltage or negative voltage. The voltage at the inverting input terminal of the comparator U₁ is a dividing voltage divided by the first divider resistor unit and the second divider resistor unit (the resistor R_{bias} and the resistor R_{N} in FIG. 2) to the auxiliary voltage Vₐᵤₓ. The dividing voltage is a reference voltage of the comparator U₁. Thus, the voltage at the non-inverting input terminal of the comparator U₁ is less than the voltage at the inverting input terminal, and the comparator U₁ outputs a low voltage level at its output terminal. The diode D_{Q} is not conducting, and the switch Q_{off} is kept off, such that the auxiliary voltage Vₐᵤₓ is applied to the control terminal of the switch Q_{OR} through the driving resistor R_{goff}, and the switch Q_{OR} is kept on, thereby the power flowing from the output capacitor Cout to the low-voltage battery, or no power flowing. If current backflow occurs, that is, when the current flows from the low-voltage battery to the output capacitor Cout, please refer to the schematic diagram of a second operation mode of a circuit for preventing battery voltage loss on the output side of an on-board DCDC converter of an embodiment of the present invention as shown in FIG. 3b, wherein the current flows in the direction of the arrow. The voltage drop generated by the detection resistor Rₛₑₙₛₑ and the on-resistance R_{ds_ON} of the switch Q_{OR} is applied to the non-inverting input terminal of the comparator U₁, and the voltage at the non-inverting input terminal is positive voltage. When the positive voltage is larger than or equal to the dividing voltage divided by R_{bias} and R_{N} to the auxiliary voltage Vₐᵤₓ, the voltage at the non-inverting input terminal of the comparator U₁ is larger than or equal to the voltage at the inverting input terminal. The output terminal of the comparator U₁ outputs a high voltage level, and the diode D_{Q} is turned on. The high voltage level output from the comparator U₁ is applied to the control terminal of the switch Q_{off}, and the switch Q_{off} is turned on. Since the first terminal of Q_{off} is connected to the negative terminal of the auxiliary voltage Vₐᵤₓ, the first terminal of the switch Q_{OR} is connected to the first terminal of the output capacitor Cout and the first terminal of the output capacitor Cout is connected to the negative terminal of the auxiliary voltage Vₐᵤₓ, the switch Q_{OR} is thus controlled to be turned off, so as to prevent the current from continuing to flow back from the low-voltage battery to the output capacitor Cout, that is, to prevent the voltage loss of low-voltage battery.

In addition, according to the above analysis, different anti-backflow currents can be achieved by setting the dividing voltage applied to the inverting terminal of the comparator U₁ that divided by the first divider resistor unit and the second divider resistor unit to the auxiliary voltage Vₐᵤₓ. Specifically, as shown in FIG. 2, the larger the dividing voltage applied to the inverting terminal of the comparator U₁ that divided by the resistor R_{bias} and the resistor R_{N} to the auxiliary voltage Vₐᵤₓ, the greater the anti-backflow current value achieved. As such, different anti-backflow current values can be set according to actual product requirements, that is, the circuit for preventing battery voltage loss on the output side of the present invention is more flexible and has low power consumption.

With the development of electric vehicle technology, there has been higher and higher requirements for the functional safety of the entire vehicle in the industry. The first self-check unit 210, the second self-check unit 220 and the third self-check unit 230 in the circuit for preventing battery voltage loss on the output side in the present application can sequentially test the validity of the first switch unit 110, the comparator unit 120 and the second switch unit 130, thereby improving the reliability of the circuit for preventing battery voltage loss on the output side of the present application. Please refer to a schematic diagram of a control waveform of a circuit for preventing battery voltage loss on the output side of an embodiment of the present invention. At time t0, the controller outputs a first self-check control signal S1 with a high-level, which controls the switch Qₜₑₛₜ₂ in the first self-check unit 210 to be turned on. The voltage SQtest₁ between the first terminal and the control terminal of the switch Qₜₑₛₜ₁ in the second self-check unit 220 increases, making switch Qₜₑₛₜ₁ in the second self-check unit 220 turn on, and thus the auxiliary voltage Vₐᵤₓ is applied to the control terminal of the switch Q_{off} in the second switch unit 130. That is, the control signal S_{Qoff} at the control terminal of the switch tube Q_{off} in the second switch unit 130 becomes a high voltage level, making the switch Q_{off} turn on. The control signal S_{QOR} at the control terminal of the switch Q_{OR} in the first switch unit 110 is pulled low, and the switch Q_{OR} in the first switch unit 110 is turned off. As such, if the controller outputs the first self-check control signal S1 with a high voltage level and the switch Q_{OR} in the first switch unit 110 can be in the off state, it can be considered that the first switch unit 110 and the second switch unit 130 can work normally. Next, at time t1, the controller outputs a second self-check control signal S2 with a high voltage level, which controls the switch Qₜₑₛₜ₃ in the third self-check unit 230 to be turned on, and then the output capacitor Cout is discharged through the discharge branch formed by the switch Qₜₑₛₜ₃ and the discharge resistor unit. Since at that time the switch Q_{OR} in the first switch unit 110 is turned off, the low-voltage battery cannot charge the output capacitor Cout, thereby ensuring that the output capacitor Cout can work normally through the discharge branch formed by the switch Qₜₑₛₜ₃ and the discharge resistor unit. Until time t2, the voltage of the output capacitor Cout is discharged to a sufficiently small value. At time t2, the controller outputs the first self-check control signal S1 with a low voltage level, which controls the switch Qₜₑₛₜ₂ in the first self-check unit 210 to turn off, and the switch Qₜₑₛₜ₁ in the second self-check unit 220 to turn off. At this time, the voltage applied to the non-inverting input terminal of the comparator U₁ is the voltage difference between the low-voltage battery and the output capacitor Cout. Since the voltage of the output capacitor Cout is discharged to a sufficiently small value, the voltage difference between the low-voltage battery and the output capacitor Cout is greater than or equal to the reference voltage of the inverting input terminal of the comparator U₁, and then the comparator U₁ outputs a high voltage level at its output terminal, making the diode D_{Q} conduct. The high voltage level output by the comparator U₁ is applied to the control terminal of the switch Q_{off}, so that the switch Q_{off} continues to be turned on, and the switch Q_{OR} continues to be turned off until the end of self checking (at time t3). As such, if the controller outputs the second self-check control signal S2 with a high voltage level and the switch Q_{OR} in the first switch unit 110 can continue to be in an off state or the comparator U₁ outputs a high voltage level at the output terminal or the voltage of the capacitor Cout is still small, it can be considered that the comparator unit 120 can work normally. In this way, the first self-check unit 210, the second self-check unit 220 and the third self-check unit 230 can test in standby mode the validity of the first switch unit 110, the comparator unit 120 and the second switch unit 130, thereby improving the reliability of the circuit for preventing battery voltage loss on the output side of the present application.

In an embodiment, the comparator unit 120 further includes a hysteresis control loop 121. As shown in FIG. 2, the hysteresis control loop 121 includes a series branch formed by a hysteresis resistor unit (resistor R_{FB} in FIG. 2) and a diode D_{FB}, wherein one terminal of the hysteresis resistor unit is connected to the output terminal of the comparator U₁, the other terminal of the hysteresis resistor unit is connected to the anode of the diode D_{FB}, and the cathode of the diode D_{FB} is connected to the non-inverting input terminal of the comparator U₁. As shown in FIG. 2, the inverting input terminal of the comparator receives the reference voltage. When the current flows back, if the voltage drop generated by the reversed current through the detection resistor Rₛₑₙₛₑ and the on-resistance R_{ds_ON} of the switch Q_{OR} is greater than or equal to the reference voltage, the comparator U₁ outputs a high voltage level, and then the switch Q_{OR} is turned off to prevent current from flowing back. If the voltage drop generated by the reverse current through the detection resistor Rₛₑₙₛₑ and the on-resistance R_{ds_ON} of the switch Q_{OR} is less than the reference voltage, the comparator U₁ outputs a low voltage level and the switch Q_{OR} is turned on. So when the voltage drop generated by the reversed current through the detection resistor Rₛₑₙₛₑ and the on-resistance R_{ds_ON} of the switch Q_{OR} fluctuates near the reference voltage, the comparator U₁ switches frequently between the high voltage level output and the low voltage level output, affecting the normal operation of the circuit for preventing the loss of battery voltage on the output side of the on-board DCDC converters of the present invention. In the present invention, a hysteresis control loop 121 is added. When the voltage drop generated by the reversed current through the detection resistor Rₛₑₙₛₑ and the on-resistance R_{ds_ON} of the switch Q_{OR} is greater than or equal to the reference voltage and the comparator U₁ outputs a high voltage level, the high voltage level is applied to the non-inverting input terminal of the comparator U₁ through the resistor R_{FB} and the diode D_{FB}. Then, the voltage at the non-inverting input terminal of the comparator U₁ is increased from the voltage drop generated by the reversed current through the detection resistor Rₛₑₙₛₑ and the on-resistance R_{ds_ON} of the switch Q_{OR} to the sum of the voltage drop generated by reversed current through the detection resistor Rₛₑₙₛₑ and the on-resistance R_{ds_ON} of the switch Q_{OR} and the voltage fed back through the resistor R_{FB} by the high voltage level output from the comparator U₁. As such, even if the backflow current fluctuates slightly, the output of the comparator U₁ will not be changed. Only when the backflow current is small sufficiently, such that the sum of the voltage drop generated by the backflow current through the detection resistor Rₛₑₙₛₑ and the on-resistance R_{ds_ON} of the switch Q_{OR} and the voltage fed back through the resistor R_{FB} by the high voltage level output from the comparator U₁ is less than the reference voltage, the comparator U₁ outputs a low voltage level, which thereby improves the reliability of the circuit for preventing the loss of the battery voltage on the output side of the on-board DCDC converter. By adjusting the resistance value of the hysteresis resistor unit of the hysteresis control loop 121, the voltage value fed back from the output terminal of the comparator U₁ to the non-inverting input terminal of the comparator U₁ can be regulated, such that the hysteresis control range can be adjusted.

In an embodiment, the first self-check unit 210 further includes a driving pull-down resistor R_{dw5}, a driving pull-down capacitor C_{dw5} and a driving resistor R_{b2}. The driving pull-down resistor R_{dw5} and the driving pull-down capacitor C_{dw5} are both connected between the first terminal and the control terminal of the switch Qₜₑₛₜ₂. The control terminal of the switch Qₜₑₛₜ₂ receives the first self-check control signal S1 through the driving resistor R_{b2}.

In an embodiment, as shown in FIG. 2, the second terminal of the switch Qₜₑₛₜ₁ in the second self-check unit 220 is further connected to the cathode of the diode D_{Q} through the pull-up resistor Rᵤₚ₂. In an embodiment, as shown in FIG. 2, the control terminal of the switch transistor Qₜₑₛₜ₁ is further connected to the second terminal of the switch Qₜₑₛₜ₂ through a resistor unit (the resistor R_{b1} in FIG. 2 ). In an embodiment, as shown in FIG. 2, the second self-check unit 220 further includes a driving pull-down resistor R_{dw2} and a driving pull-down capacitor C_{dw2}. The driving pull-down resistor R_{dw2} and the driving pull-down capacitor C_{dw2} are both connected between the first terminal and the control terminals of the switch Qₜₑₛₜ₂.

In an embodiment, the third self-check unit 230 further includes a driving pull-down resistor R_{dw4}, a driving pull-down capacitor C_{dw4} and a driving resistor R_{b3}. The driving pull-down resistor R_{dw4} and the driving pull-down capacitor C_{dw4} are both connected between the first terminal and the control terminal of the switch Qₜₑₛₜ₃. The control terminal of the switch Qₜₑₛₜ₃ receives the second self-check control signal S2 through the driving resistor R_{b3}.

In an embodiment, as shown in FIG. 2 , the first switch unit 110 further includes a driving pull-down resistor R_{dw3}, a driving pull-down capacitor C_{dw3} and protection diodes Z₁, Z₂. The driving pull-down resistor R_{dw3} and the driving pull-down capacitor C_{dw3} are both connected between the first terminal and the control terminal of the switch Q_{OR}. The cathode of the protection diode Z₁ is connected to the cathode of the protection diode Z₂, the anode of the protection diode Z₁ is connected to the control terminal of the switch Q_{OR}, and the anode of the protection diode Z₂ is connected to the first terminal of the switch Q_{OR}, so as to improve the reliability of the first switch unit 110.

In an embodiment, as shown in FIG. 2 , the second switch unit 130 further includes a driving pull-down capacitor C_{dw1} connected between the first terminal and the control terminal of the switch Q_{off}.

In an embodiment, as shown in FIG. 2, the first divider resistor unit includes a resistor R_{bias}, the second divider resistor unit includes a resistor R_{N}, and the resistor R_{bias} and the resistor R_{N} are connected in series between the positive terminal and the negative terminal of the auxiliary voltage Vₐᵤₓ to form a dividing voltage branch. The non-inverting input terminal of the comparator is connected to the first terminal of the low-voltage battery through a resistor unit (such as the resistor Rₚ in FIG. 2). In an embodiment, as shown in FIG. 2, the comparator unit 120 further includes a diode D_{PN}, a capacitor C_{PN} and a pull-up resistor Rᵤₚ₁. The anode of the diode D_{PN} is connected to the non-inverting input terminal of the comparator U₁. The cathode of the diode D_{PN} is connected to the inverting input terminal of the comparator U₁. The capacitor C_{PN} is connected between the non-inverting input terminal and the inverting input terminal of the comparator U₁. The pull-up resistor Rᵤₚ₁ is connected between the output terminal of the comparator U₁ and the positive terminal of the auxiliary voltage Vₐᵤₓ. The diode D_{PN} is mainly used to protect the input terminal of the comparator U₁ and prevent the voltage difference from being too large.

In an embodiment, as shown in FIG. 2 , the second terminal of the switch Q_{off} is connected to the positive terminal of the auxiliary voltage Vₐᵤₓ through a resistor unit (the resistor R_{gon} shown in FIG. 2).

In an embodiment, as shown in FIG. 2, the detection resistor Rₛₑₙₛₑ is connected between the first terminal of the output capacitor Cout and the first terminal of the switch Q_{OR}. In other embodiments, the detection resistor Rₛₑₙₛₑ is connected between the first terminal of the low-voltage battery and the second terminal of the switch Q_{OR}.

In an embodiment, as shown in FIG. 2, the first terminal of the output capacitor Cout is a positive voltage terminal, the first terminal of the low-voltage battery is a positive voltage terminal, the second terminal of the output capacitor Cout is a negative voltage terminal, and the second terminal of the low-voltage battery is a negative voltage terminal. That is, the switch Q_{OR} is connected between the positive voltage terminal of output capacitor Cout and the positive voltage terminal of the low-voltage battery.

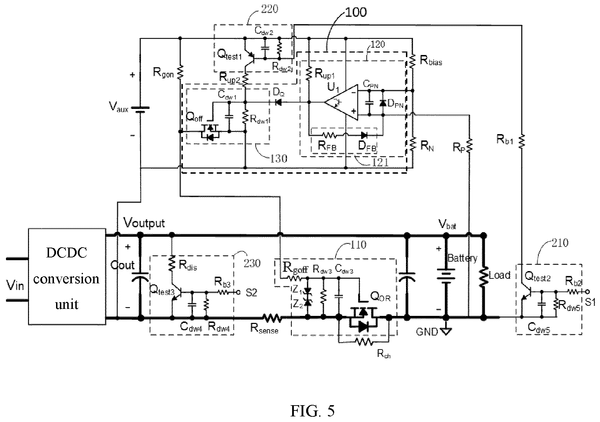

In another embodiment, as shown in FIG. 5, refer to a schematic diagram of a circuit for preventing battery voltage loss on the output side of an on-board DCDC converter according to another embodiment of the present invention. The first terminal of the output capacitor Cout is a negative voltage terminal, the first terminal of the low-voltage battery is a negative voltage terminal, the second terminal of the output capacitor Cout is a positive voltage terminal, and the second terminal of the low-voltage battery is a positive voltage terminal. That is, the switch Q_{OR} is connected between the negative voltage terminal of output capacitor Cout and the negative voltage terminal of the low-voltage battery. Others in this embodiment are the same as the embodiment shown in FIG. 2, and will not be described again.

The negative voltage terminal of the output capacitor Cout and the negative voltage terminal of the low-voltage battery as described above are the reference ground terminals.

Any of the resistor units as described above can include only one resistor, or can include multiple resistors in series and/or in parallel.

Finally, it should be noted that the above embodiments are only used to illustrate the technical solution of the present invention rather than limitation thereof.

## Claims

1. A circuit for preventing battery voltage loss on the output side of an on-board DCDC converter, the on-board DCDC converter comprising an output capacitor (Cₒᵤₜ) and a low-voltage battery (Battery) connected in parallel, wherein the circuit comprises:
a first switch unit (110) and a detection resistor (Rₛₑₙₛₑ), wherein the first switch unit (110) includes a switch (Q_{OR}), and the switch (Q_{OR}) and the detection resistor (Rₛₑₙₛₑ) are connected in series and are configured to be connected in series between a first terminal of the output capacitor (Cₒᵤₜ) and a first terminal of the low-voltage battery (Battery);
a switch control unit (100), wherein a first input terminal of the switch control unit (100) is configured to be connected to the first terminal of the low-voltage battery (Battery), a second input terminal is connected to a common node of a first divider resistor unit and a second divider resistor unit, an output terminal is connected to a positive terminal of an auxiliary voltage and a control terminal of the switch (Q_{OR}), the first divider resistor unit and the second divider resistor unit are connected in series between the positive terminal and a negative terminal of the auxiliary voltage, and the negative terminal of the auxiliary voltage is configured to be connected to the first terminal of the output capacitor (Cₒᵤₜ);
a first self-check unit (210), a second self-check unit (220) , a third self-check unit (230) and a controller, the first self-check unit (210) including a first self-check switch (Qₜₑₛₜ₂), wherein a first terminal of the first self-check switch (Qₜₑₛₜ₂) is grounded, the second self-check unit (220) including a second self-check switch (Qₜₑₛₜ₁),
wherein a first terminal of the second self-check switch (Qₜₑₛₜ₁) is connected to the positive terminal of the auxiliary voltage, a second terminal is connected to a detection connection terminal of the switch control unit (100), and a control terminal is connected to a second terminal of the first self-check switch (Qₜₑₛₜ₂), the controller configured to output a first self-check control signal (S1) to a control terminal of the first self-check switch (Qₜₑₛₜ₂), the first self-check control signal (S1) includes a high voltage level and a low voltage level, to control the first self-check switch (Qₜₑₛₜ₂) to be turned on or turned off, so as to control the second self-check switch (Qₜₑₛₜ₁) to be turned on or turned off, wherein, when the second self-check switch (Qₜₑₛₜ₁) is turned on, the auxiliary voltage is applied to the detection connection terminal of the switch control unit (100), wherein the third self-check unit (230) includes a third self-check switch (Qₜₑₛₜ₃) and a discharging resistor unit, wherein the third self-check switch (Qₜₑₛₜ₃) and the discharging resistor unit are connected in series and are configured to be connected in parallel between a positive voltage terminal and a negative voltage terminal of the output capacitor (Cout), wherein the controller is further configured to output a second self-check control signal (S2) to a control terminal of the third self-check switch (Qₜₑₛₜ₃), wherein the second self-check control signal (S2) includes a high voltage level and a low voltage level to control the switch (Qₜₑₛₜ₃) to be turned on or turned off;
wherein: when the voltage at the first input terminal of the switch control unit (100) is lower than the voltage at the second input terminal of the switch control unit (100), the auxiliary voltage is applied to the control terminal of the switch (Q_{OR}), such that the switch (Q_{OR}) is kept to be turned on; when the voltage at the first input terminal of the switch control unit (100) is higher than or equal to the voltage at the second input terminal of the switch control unit (100), the switch (Q_{OR}) is turned off.

2. The circuit for preventing battery voltage loss on the output side of an on-board DCDC converter according to claim 1, wherein: the switch control unit (100) includes a comparator, a non-inverting input terminal of the comparator is connected to the first input terminal of the switch control unit (100), an inverting input terminal of the comparator is connected to the second input terminal of the switch control unit (100), an output terminal is connected to an anode of a diode (D_{Q}), and a cathode of the diode (D_{Q}) is connected to the detection connection terminal of the switch control unit (100).

3. The circuit for preventing battery voltage loss on the output side of an on-board DCDC converter according to claim 2, wherein: the switch control unit (100) includes a further switch (Q_{off}), a first terminal of the further switch (Q_{off}) is connected to the negative terminal of the auxiliary voltage, and is connected to the cathode of the diode (D_{Q}) and a control terminal of the further switch (Q_{off}) through a driving pull-down resistor, and a second terminal of the further switch (Q_{off}) is connected to the positive terminal of the auxiliary voltage and the control terminal of the switch (Q_{OR}).

4. The circuit for preventing battery voltage loss on the output side of an on-board DCDC converter according to claim 3, wherein: the circuit is configured such that,
when there is no power flowing between the output capacitor (Cₒᵤₜ) and the low-voltage battery (Battery), or a current flows from the output capacitor (Cₒᵤₜ) to the low-voltage battery (Battery), a voltage drop generated by the detection resistor (Rₛₑₙₛₑ) and an on-resistance of the switch (Q_{OR}) is applied to the non-inverting input terminal of the comparator, and the voltage at the non-inverting input terminal is zero voltage or negative voltage, and a voltage at the inverting input terminal of the comparator is a dividing voltage divided by the first divider resistor unit and the second divider resistor unit to the auxiliary voltage, thereby the voltage at the non-inverting input terminal of the comparator being less than the voltage at the inverting input terminal, the comparator outputting a low voltage level at its output terminal, the diode (D_{Q}) being not conducting, the further switch (Q_{off}) being kept off,
the auxiliary voltage being applied to the control terminal of the switch (Q_{OR}), and the switch (Q_{OR}) being kept on; wherein the circuit is further configured such that,
when the current flows from the low-voltage battery (Battery) to the output capacitor (Cₒᵤₜ), the voltage drop generated by the detection resistor (Rₛₑₙₛₑ) and the on-resistance of the switch (Q_{OR}) is applied to the non-inverting input terminal of the comparator, and the voltage at the non-inverting input terminal is positive voltage, and when the voltage at the non-inverting input terminal of the comparator is larger than or equal to the voltage at the inverting input terminal of the comparator, the output terminal of the comparator outputs a high voltage level, and the diode (D_{Q}) is turned on, thereby the high voltage level output from the comparator being applied to the control terminal of the further switch (Q_{off}) to enable the further switch (Q_{off}) to be turned on, so as to control the switch (Q_{OR}) to be turned off.

5. The circuit for preventing battery voltage loss on the output side of an on-board DCDC converter according to claim 3, wherein: the controller is configured such that at time t0, the first self-check control signal (S1) is a high voltage level, controlling the switch (Qₜₑₛₜ₂) in the first self-check unit (210) to be turned on, increasing a voltage between the first terminal and the control terminal of the switch (Qₜₑₛₜ₁) in the second self-check unit (220), and turn on the switch (Qₜₑₛₜ₁) in the second self-check unit (220), and the auxiliary voltage is applied to the control terminal of the further switch (Q_{off}) in the second switch unit to conduct the further switch (Q_{off}), pulling down a control signal at the control terminal of the switch (Q_{OR}) in the first switch unit (110), and turning off the switch (Q_{OR}) in the first switch unit (110); wherein the controller is further configured such that, at time t1, the second self-check control signal (S2) is a high voltage level, controlling the switch (Qₜₑₛₜ₃) in the third self-check unit (230) to be turned on, and the output capacitor (Cₒᵤₜ) being discharged through a discharge branch formed by the third self-check switch (Qₜₑₛₜ₃) and the discharge resistor unit until time t2; wherein the controller is further configured such that, at time t2, the first self-check control signal (S1) is a low voltage level, controlling the switch (Qₜₑₛₜ₂) in the first self-check unit (210) to turn off, and the switch (Qₜₑₛₜ₁) in the second self-check unit (220) to turn off, a voltage applied to the non-inverting input terminal of the comparator being a voltage difference between the low-voltage battery (Battery) and the output capacitor (Cₒᵤₜ), wherein for a voltage of the output capacitor (Cₒᵤₜ) being discharged to a sufficiently small value, the voltage difference between the low voltage battery and the output capacitor (Cₒᵤₜ) is greater than or equal to a reference voltage at the inverting input terminal of the comparator and the comparator outputs a high voltage level at its output terminal, thereby conducting the diode (D_{Q}), applying a high voltage level output by the comparator to the control terminal of the further switch (Q_{off}), and keeping the further switch (Q_{off}) on and the switch (Q_{OR}) off until the end of self-checking at time t3.

6. The circuit for preventing battery voltage loss on the output side of an on-board DCDC converter according to any one of claims 2 to 5, wherein: the switch control unit (100) further includes a series branch formed by a hysteresis resistor unit and a further diode (D_{FB}), and wherein one terminal of the hysteresis resistor unit is connected to the output terminal of the comparator, the other terminal of the hysteresis resistor unit is connected to the anode of the further diode (D_{FB}), and the cathode of the further diode (D_{FB}) is connected to the non-inverting input terminal of the comparator.

7. The circuit for preventing battery voltage loss on the output side of an on-board DCDC converter according to claim 1, wherein the circuit is configured to be used in a topology, where the first terminal of the output capacitor (Cₒᵤₜ) is a positive voltage terminal, a first terminal of the low voltage battery is a positive voltage terminal, a second terminal of the output capacitor (Cₒᵤₜ) is a negative voltage terminal, and a second terminal of the low voltage battery is a negative voltage terminal.

8. The circuit for preventing battery voltage loss on the output side of an on-board DCDC converter according to claim 1, wherein the circuit is configured to be used in a topology, where the first terminal of the output capacitor (Cₒᵤₜ) is a negative voltage terminal, a first terminal of the low voltage battery is a negative voltage terminal, a second terminal of the output capacitor (Cₒᵤₜ) is a positive voltage terminal, and a second terminal of the low voltage battery is a positive voltage terminal.

9. The circuit for preventing battery voltage loss on the output side of an on-board DCDC converter according to claim 7 or 8, wherein: the detection resistor (Rₛₑₙₛₑ) is configured to be connected between the first terminal of the output capacitor (Cₒᵤₜ) and the first terminal of the switch (Q_{OR}).

10. The circuit for preventing battery voltage loss on the output side of an on-board DCDC converter according to claim 7 or 8, wherein: the detection resistor (Rₛₑₙₛₑ) is configured to be connected between the first terminal of the low voltage battery and the second terminal of the switch (Q_{OR}).

11. The circuit for preventing battery voltage loss on the output side of an on-board DCDC converter according to claim 1, wherein: the first self-check switch (Qₜₑₛₜ₂) is an NPN transistor with its first terminal being the emitter (E), its second terminal being the collector (C), and its control terminal being the base (B); the second self-check switch (Qₜₑₛₜ₁) is a PNP transistor with its first terminal being the emitter (E), its second terminal being the collector (C), and its control terminal being the base (B); and the third self-check switch (Qₜₑₛₜ₃) is a NPN transistor with its first terminal being the emitter (E), its second terminal being the collector (C), and its control terminal being the base (B).

12. The circuit for preventing battery voltage loss on the output side of an on-board DCDC converter according to claim 1, wherein: the switch (Q_{OR}) is an N-type metal-oxide-semiconductor field effect transistor with its first terminal being the source (S), its second terminal being the drain (D), and its control terminal being the gate (G).

13. The circuit for preventing battery voltage loss on the output side of an on-board DCDC converter according to claim 3, wherein: the further switch (Q_{off}) is an N-type metal-oxide-semiconductor field effect transistor with its first terminal being the source (S), its second terminal being the drain (D), and its control terminal being the gate (G).

## Patentansprüche

1. Schaltung zur Verhinderung eines Spannungsverlusts einer Batterie auf der Ausgangsseite eines DCDC-Wandlers im Fahrzeug, wobei der DCDC-Wandler einen Ausgangskondensator (Cₒᵤₜ) und eine Niederspannungsbatterie (Batterie) umfasst, die parallel geschaltet sind, wobei die Schaltung Folgendes umfasst:
eine erste Schalteinheit (110) und einen Erkennungswiderstand (Rₛₑₙₛₑ), wobei die erste Schalteinheit (110) einen Schalter (Q_{OR}) enthält, wobei der Schalter (Q_{OR}) und der Erkennungswiderstand (Rₛₑₙₛₑ) in Reihe geschaltet und dazu eingerichtet sind, in Reihe zwischen einem ersten Anschluss des Ausgangskondensators (Cₒᵤₜ) und einem ersten Anschluss der Niederspannungsbatterie (Batterie) geschaltet zu werden;
eine Schaltsteuereinheit (100), wobei ein erster Eingangsanschluss der Schaltsteuereinheit (100) eingerichtet ist, mit dem ersten Anschluss der Niederspannungsbatterie (Batterie) verbunden zu werden, während ein zweiter Eingangsanschluss mit einem gemeinsamen Knoten einer ersten Spannungsteilerwiderstandseinheit und einer zweiten Spannungsteilerwiderstandseinheit verbunden ist, wobei ein Ausgangsanschluss mit einem positiven Anschluss einer Hilfsspannung sowie einem Steueranschluss des Schalters (Q_{OR}) verbunden ist, wobei die erste Spannungsteilerwiderstandseinheit und die zweite Spannungsteilerwiderstandseinheit in Reihe zwischen dem positiven Anschluss und dem negativen Anschluss der Hilfsspannung geschaltet sind, und wobei der negative Anschluss der Hilfsspannung dazu eingerichtet ist, mit dem ersten Anschluss des Ausgangskondensators (Cₒᵤₜ) verbunden zu werden;
eine erste Selbstprüfeinheit (210), eine zweite Selbstprüfeinheit (220), eine dritte Selbstprüfeinheit (230) und einen Controller, wobei die erste Selbstprüfeinheit (210) einen ersten Selbstprüfschalter (Qₜₑₛₜ₂) enthält, wobei ein erster Anschluss des ersten Selbstprüfschalters (Qₜₑₛₜ₂) geerdet ist, wobei die zweite Selbstprüfeinheit (220) einen zweiten Selbstprüfschalter (Qₜₑₛₜ₁) enthält, wobei ein erster Anschluss des zweiten Selbstprüfschalters (Qₜₑₛₜ₁) mit dem positiven Anschluss der Hilfsspannung verbunden ist, während ein zweiter Anschluss mit einem Erkennungsverbindungsanschluss der Schaltsteuereinheit (100) verbunden ist, wobei ein Steueranschluss mit einem zweiten Anschluss des ersten Selbstprüfschalters (Qₜₑₛₜ₂) verbunden ist, wobei der Controller dazu eingerichtet ist, ein erstes Selbstprüfsteuersignal (S1) an den Steueranschluss des ersten Selbstprüfschalters (Qₜₑₛₜ₂) auszugeben, wobei das erste Selbstprüfsteuersignal (S1) einen hohen Spannungspegel und einen niedrigen Spannungspegel enthält, um den ersten Selbstprüfschalter (Qₜₑₛₜ₂) zur Ein- oder Ausschaltung zu steuern, so dass der zweite Selbstprüfschalter (Qₜₑₛₜ₁) zur Ein- oder Ausschaltung gesteuert wird, wobei wenn der zweite Selbstprüfschalter (Qₜₑₛₜ₁) eingeschaltet ist, die Hilfsspannung an den Erkennungsverbindungsanschluss der Schaltsteuereinheit (100) angelegt wird, wobei die dritte Selbstprüfeinheit (230) einen dritten Selbstprüfschalter (Qₜₑₛₜ₃) und eine Entladewiderstandseinheit enthält, wobei der dritte Selbstprüfschalter (Qₜₑₛₜ₃) und die Entladewiderstandseinheit in Reihe geschaltet und dazu eingerichtet sind, parallel zwischen einem positiven Spannungsanschluss und einem negativen Spannungsanschluss des Ausgangskondensators (Cₒᵤₜ) geschaltet zu werden, wobei der Controller ferner dazu eingerichtet ist, ein zweites Selbstprüfsteuersignal (S2) an den Steueranschluss des dritten Selbstprüfschalters (Qₜₑₛₜ₃) auszugeben, wobei das zweite Selbstprüfsteuersignal (S2) einen hohen Spannungspegel und einen niedrigen Spannungspegel enthält, um den Schalter (Qₜₑₛₜ₃) zur Ein- oder Ausschaltung zu steuern;
wobei wenn die Spannung am ersten Eingangsanschluss der Schaltsteuereinheit (100) niedriger als die Spannung am zweiten Eingangsanschluss der Schaltsteuereinheit (100) ist, die Hilfsspannung am Steueranschluss des Schalters (Q_{OR}) angelegt wird, so dass der Schalter (Q_{OR}) eingeschaltet bleibt, wobei wenn die Spannung am ersten Eingangsanschluss der Schaltsteuereinheit (100) höher oder gleich der Spannung am zweiten Eingangsanschluss der Schaltsteuereinheit (100) ist, der Schalter (Q_{OR}) ausgeschaltet wird.

2. Schaltung zur Verhinderung eines Spannungsverlusts einer Batterie auf der Ausgangsseite eines DCDC-Wandlers im Fahrzeug nach Anspruch 1, wobei die Schaltsteuereinheit (100) einen Komparator enthält, wobei ein nichtinvertierender Eingangsanschluss des Komparators mit dem ersten Eingangsanschluss der Schaltsteuereinheit (100) verbunden ist, wobei ein invertierender Eingangsanschluss des Komparators mit dem zweiten Eingangsanschluss der Schaltsteuereinheit (100) verbunden ist, wobei ein Ausgangsanschluss mit einer Anode einer Diode (D_{Q}) verbunden ist, und wobei eine Kathode der Diode (D_{Q}) mit dem Erkennungsverbindungsanschluss der Schaltsteuereinheit (100) verbunden ist.

3. Schaltung zur Verhinderung eines Spannungsverlusts einer Batterie auf der Ausgangsseite eines DCDC-Wandlers im Fahrzeug nach Anspruch 2, wobei die Schaltsteuereinheit (100) einen weiteren Schalter (Q_{off}) enthält, wobei ein erster Anschluss des weiteren Schalters (Q_{off}) mit dem negativen Anschluss der Hilfsspannung verbunden und mit der Kathode der Diode (D_{Q}) sowie einem Steueranschluss des weiteren Schalters (Q_{off}) über einen Antriebs-Pull-Down-Widerstand verbunden ist, während ein zweiter Anschluss des weiteren Schalters (Q_{off}) mit dem positiven Anschluss der Hilfsspannung sowie dem Steueranschluss des Schalters (Q_{OR}) verbunden ist.

4. Schaltung zur Verhinderung eines Spannungsverlusts einer Batterie auf der Ausgangsseite eines DCDC-Wandlers im Fahrzeug nach Anspruch 3, wobei die Schaltung so eingerichtet ist, dass, wenn kein Strom zwischen dem Ausgangskondensator (Cₒᵤₜ) und der Niederspannungsbatterie (Batterie) fließt oder ein Strom vom Ausgangskondensator (C_{outf}) zur Niederspannungsbatterie (Batterie) fließt, ein durch den Erkennungswiderstand (Rₛₑₙₛₑ) und einen Einschaltwiderstand des Schalters (Q_{OR}) erzeugter Spannungsabfall am nichtinvertierenden Eingangsanschluss des Komparators angelegt wird, wobei die Spannung am nichtinvertierenden Eingangsanschluss null oder negative Spannung ist, wobei eine Spannung am invertierenden Eingangsanschluss des Komparators eine durch die erste Spannungsteilerwiderstandseinheit und die zweite Spannungsteilerwiderstandseinheit geteilte Spannung zur Hilfsspannung ist, wodurch die Spannung am nichtinvertierenden Eingangsanschluss des Komparators kleiner als die Spannung am invertierenden Eingangsanschluss ist, wobei der Komparator einen niedrigen Spannungspegel an seinem Ausgangsanschluss ausgibt, wobei die Diode (D_{Q}) nicht leitend ist, wobei der weitere Schalter (Q_{off}) ausgeschaltet bleibt, wobei die Hilfsspannung am Steueranschluss des Schalters (Q_{OR}) angelegt wird, wobei der Schalter (Q_{OR}) eingeschaltet bleibt, wobei die Schaltung ferner so eingerichtet ist, dass, wenn der Strom von der Niederspannungsbatterie (Batterie) zum Ausgangskondensator (Cₒᵤₜ) fließt, der durch den Erkennungswiderstand (Rₛₑₙₛₑ) und den Einschaltwiderstand des Schalters (Q_{OR}) erzeugte Spannungsabfall am nichtinvertierenden Eingangsanschluss des Komparators angelegt wird, wobei die Spannung am nichtinvertierenden Eingangsanschluss positiv ist, wobei wenn die Spannung am nichtinvertierenden Eingangsanschluss des Komparators größer oder gleich der Spannung am invertierenden Eingangsanschluss des Komparators ist, der Ausgangsanschluss des Komparators einen hohen Spannungspegel ausgibt und die Diode (D_{Q}) eingeschaltet wird, wodurch der vom Komparator ausgegebene hohe Spannungspegel am Steueranschluss des weiteren Schalters (Q_{off}) angelegt wird, so dass der weitere Schalter (Q_{off}) eingeschaltet wird, um den Schalter (Q_{OR}) zur Ausschaltung zu steuern.

5. Schaltung zur Verhinderung eines Spannungsverlusts einer Batterie auf der Ausgangsseite eines DCDC-Wandlers im Fahrzeug nach Anspruch 3, wobei der Controller so eingerichtet ist, dass zu einem Zeitpunkt t0 das erste Selbstprüfsteuersignal (S1) ein hoher Spannungspegel ist, den Schalter (Qₜₑₛₜ₂) in der ersten Selbstprüfeinheit (210) zur Einschaltung steuert, eine Spannung zwischen dem ersten Anschluss und dem Steueranschluss des Schalters (Qₜₑₛₜ₁) in der zweiten Selbstprüfeinheit (220) erhöht und den Schalter (Qₜₑₛₜ₁) in der zweiten Selbstprüfeinheit (220) einschaltet, wobei die Hilfsspannung am Steueranschluss des weiteren Schalters (Q_{off}) in einer zweiten Schalteinheit angelegt wird, um den weiteren Schalter (Q_{off}) leitend zu machen, ein Steuersignal am Steueranschluss des Schalters (Q_{OR}) in der ersten Schalteinheit (110) abzusenken und den Schalter (Q_{OR}) in der ersten Schalteinheit (110) auszuschalten, wobei der Controller ferner so eingerichtet ist, dass er zum Zeitpunkt, zu dem das zweite Selbstprüfsteuersignal (S2) ein hoher Spannungspegel ist, den Schalter (Qₜₑₛₜ₃) in der dritten Selbstprüfeinheit (230) zur Einschaltung steuert, wobei der Ausgangskondensator (Cₒᵤₜ) über einen durch den dritten Selbstprüfschalter (Qₜₑₛₜ₃) ausgebildeten Entladezweig und eine Entladewiderstandseinheit bis zum Zeitpunkt t2 entladen wird, wobei der Controller ferner so eingerichtet ist, dass er zum Zeitpunkt, zu dem das erste Selbstprüfsteuersignal (S1) ein niedriger Spannungspegel ist, den Schalter (Qₜₑₛₜ₂) in der ersten Selbstprüfeinheit (210) zur Ausschaltung und den Schalter (Qₜₑₛₜ₁) in der zweiten Selbstprüfeinheit (220) zur Ausschaltung steuert, wobei eine am nichtinvertierenden Eingangsanschluss des Komparators angelegte Spannung eine Spannungsdifferenz zwischen der Niederspannungsbatterie (Batterie) und dem Ausgangskondensator (Cₒᵤₜ) ist, wobei wenn eine Spannung des Ausgangskondensators (Cₒᵤₜ) auf einen ausreichend kleinen Wert entladen wurde, die Spannungsdifferenz zwischen der Niederspannungsbatterie und dem Ausgangskondensator (Cₒᵤₜ) größer oder gleich einer Referenzspannung am invertierenden Eingangsanschluss des Komparators ist und der Komparator einen hohen Spannungspegel an seinem Ausgangsanschluss ausgibt, wodurch die Diode (D_{Q}) leitend wird, wobei ein vom Komparator ausgegebener hoher Spannungspegel am Steueranschluss des weiteren Schalters (Q_{off}) angelegt wird und der weitere Schalter (Q_{off}) eingeschaltet sowie der Schalter (Q_{OR}) ausgeschaltet bleibt bis zum Ende der Selbstprüfung zum Zeitpunkt t3.

6. Schaltung zur Verhinderung eines Spannungsverlusts einer Batterie auf der Ausgangsseite eines DCDC-Wandlers im Fahrzeug nach einem der Ansprüche 2 bis 5, wobei die Schaltsteuereinheit (100) ferner einen in Reihe geschalteten Zweig enthält, der durch eine Hysterese-Widerstandseinheit und eine weitere Diode (D_{FB}) ausgebildet wird, wobei ein Anschluss der Hysterese-Widerstandseinheit mit dem Ausgangsanschluss des Komparators verbunden ist, wobei der andere Anschluss der Hysterese-Widerstandseinheit mit der Anode der weiteren Diode (D_{FB}) verbunden ist und die Kathode der weiteren Diode (D_{FB}) mit dem nichtinvertierenden Eingangsanschluss des Komparators verbunden ist.

7. Schaltung zur Verhinderung eines Spannungsverlusts einer Batterie auf der Ausgangsseite eines DCDC-Wandlers im Fahrzeug nach Anspruch 1, wobei die Schaltung so eingerichtet ist, dass sie in einer Topologie verwendet wird, bei der der erste Anschluss des Ausgangskondensators (Cₒᵤₜ) ein positiver Spannungsanschluss ist, wobei ein erster Anschluss der Niederspannungsbatterie ein positiver Spannungsanschluss ist, wobei ein zweiter Anschluss des Ausgangskondensators (Cₒᵤₜ) ein negativer Spannungsanschluss ist, und wobei ein zweiter Anschluss der Niederspannungsbatterie ein negativer Spannungsanschluss ist.

8. Schaltung zur Verhinderung eines Spannungsverlusts einer Batterie auf der Ausgangsseite eines DCDC-Wandlers im Fahrzeug nach Anspruch 1, wobei die Schaltung so eingerichtet ist, dass sie in einer Topologie verwendet wird, bei der der erste Anschluss des Ausgangskondensators (Cₒᵤₜ) ein negativer Spannungsanschluss ist, wobei ein erster Anschluss der Niederspannungsbatterie ein negativer Spannungsanschluss ist, wobei ein zweiter Anschluss des Ausgangskondensators (Cₒᵤₜ) ein positiver Spannungsanschluss ist, und wobei ein zweiter Anschluss der Niederspannungsbatterie ein positiver Spannungsanschluss ist.

9. Schaltung zur Verhinderung eines Spannungsverlusts einer Batterie auf der Ausgangsseite eines DCDC-Wandlers im Fahrzeug nach Anspruch 7 oder 8, wobei der Erkennungswiderstand (Rₛₑₙₛₑ) dazu eingerichtet ist, zwischen
dem ersten Anschluss des Ausgangskondensators (Cₒᵤₜ) und dem ersten Anschluss des Schalters (Q_{OR}) geschaltet zu werden.

10. Schaltung zur Verhinderung eines Spannungsverlusts einer Batterie auf der Ausgangsseite eines DCDC-Wandlers im Fahrzeug nach Anspruch 7 oder 8, wobei der Erkennungswiderstand (Rₛₑₙₛₑ) dazu eingerichtet ist, zwischen dem ersten Anschluss der Niederspannungsbatterie und dem zweiten Anschluss des Schalters (Q_{OR}) geschaltet zu werden.

11. Schaltung zur Verhinderung eines Spannungsverlusts einer Batterie auf der Ausgangsseite eines DCDC-Wandlers nach Anspruch 1, wobei der erste Selbstprüfschalter (Qₜₑₛₜ₂) ein NPN-Transistor ist, dessen erster Anschluss der Emitter (E) und dessen zweiter Anschluss der Kollektor (C) sowie dessen Steueranschluss die Basis (B) ist, wobei der zweite Selbstprüfschalter (Qₜₑₛₜ₁) ein PNP-Transistor ist, dessen erster Anschluss der Emitter (E) und dessen zweiter Anschluss der Kollektor (C) sowie dessen Steueranschluss die Basis (B) ist, wobei der dritte Selbstprüfschalter (Qₜₑₛₜ₃) ein NPN-Transistor ist, dessen erster Anschluss der Emitter (E) und dessen zweiter Anschluss der Kollektor (C) sowie dessen Steueranschluss die Basis (B) ist.

12. Schaltung zur Verhinderung eines Spannungsverlusts einer Batterie auf der Ausgangsseite eines DCDC-Wandlers nach Anspruch 1, wobei der Schalter (Q_{OR}) ein N-Typ-Metalloxid-Halbleiter-Feldeffekttransistor ist, dessen erster Anschluss die Source (S) und dessen zweiter Anschluss die Drain (D) sowie dessen Steueranschluss das Gate (G) ist.

13. Schaltung zur Verhinderung eines Spannungsverlusts einer Batterie auf der Ausgangsseite eines DCDC-Wandlers nach Anspruch 3, wobei der weitere Schalter (Q_{off}) ein N-Typ-Metalloxid-Halbleiter-Feldeffekttransistor ist, dessen erster Anschluss die Source (S) und dessen zweiter Anschluss die Drain (D) sowie dessen Steueranschluss das Gate (G) ist.

## Revendications

1. Circuit destiné à prévenir une perte de tension de batterie sur le côté sortie d'un convertisseur CC-CC embarqué, le convertisseur CC-CC comprenant un condensateur de sortie (Cₒᵤₜ) et une batterie basse tension (Battery) connectés en parallèle, dans lequel le circuit comporte :
une première unité de commutation (110) et une résistance de détection (Rₛₑₙₛₑ), dans lequel la première unité de commutation (110) comporte un commutateur (Q_{OR}), le commutateur (Q_{OR}) et la résistance de détection (Rₛₑₙₛₑ) sont connectés en série et sont configurés pour être connectés en série entre une première borne du condensateur de sortie (Cₒᵤₜ) et une première borne de la batterie basse tension (Battery) ;
une unité de commande de commutation (100), dans lequel une première borne d'entrée de l'unité de commande de commutation (100) est configurée pour être connectée à la première borne de la batterie basse tension (Battery), une seconde borne d'entrée est connectée à un nœud commun d'une première unité de résistance de diviseur et d'une seconde unité de résistance de diviseur, une borne de sortie est connectée à une borne positive d'une tension auxiliaire et à une borne de commande du commutateur (Q_{OR}), la première unité de résistance de diviseur et la seconde unité de résistance de diviseur sont connectées en série entre la borne positive et une borne négative de la tension auxiliaire, et la borne négative de la tension auxiliaire est configurée pour être connectée à la première borne du condensateur de sortie (Cₒᵤₜ) ;
une première unité d'autocontrôle (210), une deuxième unité d'autocontrôle (220), une troisième unité d'autocontrôle (230) et un dispositif de commande ; la première unité d'autocontrôle (210) comportant un premier commutateur d'autocontrôle (Qₜₑₛₜ₂), dans lequel une première borne du premier commutateur d'autocontrôle (Qₜₑₛₜ₂) est mise à la terre ; la deuxième unité d'autocontrôle (220) comportant un deuxième commutateur d'autocontrôle (Qₜₑₛₜ₁), dans lequel une première borne du deuxième commutateur d'autocontrôle (Qₜₑₛₜ₁) est connectée à la borne positive de la tension auxiliaire, une seconde borne est connectée à une borne de connexion de détection de l'unité de commande de commutation (100), et une borne de commande est connectée à une seconde borne du premier commutateur d'autocontrôle (Qₜₑₛₜ₂) ; le dispositif de commande étant configuré pour délivrer en sortie un premier signal de commande d'autocontrôle (S1) à une borne de commande du premier commutateur d'autocontrôle (Qₜₑₛₜ₂), le premier signal de commande d'autocontrôle (S1) comporte un niveau de tension haut et un niveau de tension bas pour commander le premier commutateur d'autocontrôle (Qₜₑₛₜ₂) à s'allumer ou à s'éteindre, afin de commander le deuxième commutateur d'autocontrôle (Qₜₑₛₜ₁) à s'allumer ou à s'éteindre ; dans lequel, lorsque le deuxième commutateur d'autocontrôle (Qₜₑₛₜ₁) est allumé, la tension auxiliaire est appliquée à la borne de connexion de détection de l'unité de commande de commutation (100), dans lequel la troisième unité d'autocontrôle (230) comporte un troisième commutateur d'autocontrôle (Qₜₑₛₜ₃) et une unité de résistance de décharge ; dans lequel le troisième commutateur d'autocontrôle (Qₜₑₛₜ₃) et l'unité de résistance de décharge sont connectés en série et configurés pour être connectés en parallèle entre une borne de tension positive et une borne de tension négative du condensateur de sortie (Cₒᵤₜ) ; dans lequel le dispositif de commande est en outre configuré pour délivrer en sortie un second signal de commande d'autocontrôle (S2) à une borne de commande du troisième commutateur d'autocontrôle(Qₜₑₛₜ₃), dans lequel le second signal de commande d'autocontrôle (S2) comporte un niveau de tension haut et un niveau de tension bas pour commander le commutateur (Qₜₑₛₜ₃) à s'allumer ou à s'éteindre ;
dans lequel : lorsque la tension au niveau de la première borne d'entrée de l'unité de commande de commutation (100) est inférieure à la tension au niveau de la seconde borne d'entrée de l'unité de commande de commutation (100), la tension auxiliaire est appliquée à la borne de commande du commutateur (Q_{OR}), de sorte que le commutateur (Q_{OR}) reste allumé ; lorsque la tension au niveau de la première borne d'entrée de l'unité de commande de commutation (100) est supérieure ou égale à la tension au niveau de la seconde borne d'entrée de l'unité de commande de commutation (100), le commutateur (Q_{OR}) est éteint.

2. Circuit destiné à prévenir une perte de tension de batterie sur le côté sortie d'un convertisseur CC-CC embarqué selon la revendication 1, dans lequel : l'unité de commande de commutation (100) comporte un comparateur, une borne d'entrée non-inverseuse du comparateur est connectée à la première borne d'entrée de l'unité de commande de commutation (100), une borne d'entrée inverseuse du comparateur est connectée à la seconde borne d'entrée de l'unité de commande de commutation (100), une borne de sortie est connectée à une anode d'une diode (D_{Q}), et une cathode de la diode (D_{Q}) est connectée à la borne de connexion de détection de l'unité de commande de commutation (100).

3. Circuit destiné à prévenir une perte de tension de batterie sur le côté sortie d'un convertisseur CC-CC embarqué selon la revendication 2, dans lequel : l'unité de commande de commutation (100) comporte un autre commutateur (Q_{off}), une première borne de l'autre commutateur(Q_{off}) est connectée à la borne négative de la tension auxiliaire, et est connectée à la cathode de la diode (D_{Q}) et à une borne de commande de l'autre commutateur (Q_{off})par l'intermédiaire d'une résistance de rappel d'entraînement, et une seconde borne de l'autre commutateur (Q_{off}) est connectée à la borne positive de la tension auxiliaire et à la borne de commande du commutateur (Q_{OR}).

4. Circuit destiné à prévenir une perte de tension de batterie sur le côté sortie d'un convertisseur CC-CC embarqué selon la revendication 3, dans lequel le circuit est configuré de sorte que, lorsqu'aucune puissance ne circule entre le condensateur de sortie (Cₒᵤₜ) et la batterie basse tension (Battery), ou lorsqu'un courant circule à partir du condensateur de sortie (Cₒᵤₜ) vers la batterie basse tension (Battery), une chute de tension générée par la résistance de détection (Rₛₑₙₛₑ) et un résistance à l'état passant du commutateur (Q_{OR}) soit appliquée à la borne d'entrée non-inverseuse du comparateur, et que la tension au niveau de la borne d'entrée non-inverseuse soit une tension nulle ou une tension négative, et qu'une tension au niveau de la borne d'entrée inverseuse du comparateur soit une tension de division divisée par la première unité de résistance de diviseur et la seconde unité de résistance de diviseur par rapport à la tension auxiliaire, de sorte que la tension au niveau de la borne d'entrée non-inverseuse du comparateur soit inférieure à la tension au niveau de la borne d'entrée inverseuse, le comparateur délivrant en sortie un niveau de tension bas au niveau de sa borne de sortie, la diode (D_{Q}) n'étant pas conductrice, l'autre commutateur (Q_{off}) restant éteint, la tension auxiliaire étant appliquée à la borne de commande du commutateur (Q_{OR}), et le commutateur (Q_{OR}) restant allumé ; dans lequel le circuit est en outre configuré de sorte que, lorsqu'un courant circule à partir de la batterie basse tension (Battery) vers le condensateur de sortie (Cₒᵤₜ), la chute de tension générée par la résistance de détection (Rₛₑₙₛₑ) et la résistance à l'état passant du commutateur (Q_{OR}) soit appliquée à la borne d'entrée non-inverseuse du comparateur, et que la tension au niveau de la borne d'entrée non-inverseuse soit une tension positive ; et lorsque la tension au niveau de la borne d'entrée non-inverseuse du comparateur est supérieure ou égale à la tension au niveau de la borne d'entrée inverseuse du comparateur, la borne de sortie du comparateur délivre un niveau de tension haut, et la diode (D_{Q}) est allumée, de sorte que le niveau de tension haut délivré en sortie par le comparateur soir appliqué à la borne de commande de l'autre commutateur (Q_{off}) pour permettre à l'autre commutateur (Q_{off}) de s'allumer, afin de commander le commutateur (Q_{OR}) à s'éteindre.

5. Circuit destiné à prévenir une perte de tension de batterie sur le côté sortie d'un convertisseur CC-CC embarqué selon la revendication 3, dans lequel : le dispositif de commande est configuré de sorte que, au moment t0, le premier signal de commande d'autocontrôle (S1) soit à un niveau de tension haut, commandant le commutateur (Qₜₑₛₜ₂) dans la première unité d'autocontrôle (210) à s'allumer, augmentant une tension entre la première borne et la borne de commande du commutateur (Qₜₑₛₜ₁) dans la deuxième unité d'autocontrôle (220), et éteignant le commutateur (Qₜₑₛₜ₁) dans la deuxième unité d'autocontrôle(220) ; et la tension auxiliaire est appliquée à la borne de commande de l'autre commutateur (Q_{off}) dans la seconde unité de commutation pour rendre l'autre commutateur (Q_{off}) conducteur, abaissant un signal de commande au niveau de la borne de commande du commutateur (Q_{OR}) dans la première unité de commutation (110), et éteignant le commutateur (Q_{OR}) dans la première unité de commutation (110) ; dans lequel le dispositif de commande est en outre configuré de sorte que, au moment t1, le second signal de commande d'autocontrôle (S2) soit à un niveau de tension haut, commandant le commutateur (Qₜₑₛₜ₃) dans la troisième unité d'autocontrôle (230) c, et le condensateur de sortie (Cₒᵤₜ) étant déchargé via une branche de décharge formée par le troisième commutateur d'autocontrôle (Qₜₑₛₜ₃) et l'unité de résistance de décharge jusqu'au moment t2 ; dans lequel le dispositif de commande est en outre configuré de sorte que, au moment t2, le premier signal de commande d'autocontrôle (S1) soit à un niveau de tension bas, commandant le commutateur (Qₜₑₛₜ₂) dans la première unité d'autocontrôle (210) à s'éteindre, et le commutateur (Qₜₑₛₜ₁) dans la deuxième unité d'autocontrôle (220) à s'éteindre, une tension appliquée à la borne d'entrée non-inverseuse du comparateur étant une différence de tension entre la batterie basse tension (Battery) et le condensateur de sortie (Cₒᵤₜ) ; dans lequel, pour une tension du condensateur de sortie(Cₒᵤₜ) qui est déchargée jusqu'à une valeur suffisamment faible, la différence de tension entre la batterie basse tension et le condensateur de sortie (Cₒᵤₜ) est supérieure ou égale à une tension de référence au niveau de la borne d'entrée inverseuse du comparateur, et le comparateur délivre en sortie un niveau de tension haut au niveau de sa borne de sortie, permettant la diode (D_{Q}) d'être conductrice, appliquant un niveau de tension haut délivré en sortie par le comparateur à la borne de commande de l'autre commutateur (Q_{off}), et maintenant l'autre commutateur (Q_{off}) allumé et le commutateur (Q_{OR}) éteint jusqu'à la fin de l'autocontrôle au moment t3.

6. Circuit destiné à prévenir une perte de tension de batterie sur le côté sortie d'un convertisseur CC-CC embarqué selon l'une quelconque des revendications 2 à 5, dans lequel : l'unité de commande de commutation (100) comporte en outre une branche série formée par une unité de résistance d'hystérésis et une autre diode (D_{FB}), et dans lequel une borne de l'unité de résistance d'hystérésis est connectée à la borne de sortie du comparateur, l'autre borne de l'unité de résistance d'hystérésis est connectée à l'anode de l'autre diode (D_{FB}), et la cathode de l'autre diode (D_{FB}) est connectée à la borne d'entrée non-inverseuse du comparateur.

7. Circuit destiné à prévenir une perte de tension de batterie sur le côté sortie d'un convertisseur CC-CC embarqué selon la revendication 1, dans lequel le circuit est configuré pour être utilisé dans une topologie, dans lequel la première borne du condensateur de sortie (Cₒᵤₜ) est une borne de tension positive, une première borne de la batterie basse tension est une borne de tension positive, une seconde borne du condensateur de sortie (Cₒᵤₜ) est une borne de tension négative, et une seconde borne de la batterie basse tension est une borne de tension négative.

8. Circuit destiné à prévenir une perte de tension de batterie sur le côté sortie d'un convertisseur CC-CC embarqué selon la revendication 1, dans lequel le circuit est configuré pour être utilisé dans une topologie, dans lequel la première borne du condensateur de sortie (Cₒᵤₜ) est une borne de tension négative, une première borne de la batterie basse tension est une borne de tension négative, une seconde borne du condensateur de sortie (Cₒᵤₜ) est une borne de tension positive, et une seconde borne de la batterie basse tension est une borne de tension positive.

9. Circuit destiné à prévenir une perte de tension de batterie sur le côté sortie d'un convertisseur CC-CC embarqué selon la revendication 7 ou 8, dans lequel : la résistance de détection (Rₛₑₙₛₑ) est configurée pour être connectée entre
la première borne du condensateur de sortie (Cₒᵤₜ) et la première borne du commutateur (Q_{OR}).

10. Circuit destiné à prévenir une perte de tension de batterie sur le côté sortie d'un convertisseur CC-CC embarqué selon la revendication 7 ou 8, dans lequel : la résistance de détection (Rₛₑₙₛₑ) est configurée pour être connectée entre la première borne de la batterie basse tension et la seconde borne du commutateur (Q_{OR}).

11. Circuit destiné à prévenir une perte de tension de batterie sur le côté sortie d'un convertisseur CC-CC embarqué selon la revendication 1, dans lequel : le premier commutateur d'autocontrôle (Qₜₑₛₜ₂) est un transistor NPN, sa première borne étant l'émetteur (E), sa seconde borne étant le collecteur (C), et sa borne de commande étant la base (B) ;le deuxième commutateur d'autocontrôle (Qₜₑₛₜ₁) est un transistor PNP, sa première borne étant l'émetteur (E), sa seconde borne étant le collecteur (C), et sa borne de commande étant la base (B) ; et le troisième commutateur d'autocontrôle (Qₜₑₛₜ₃) est un transistor NPN, sa première borne étant l'émetteur (E), sa seconde borne étant le collecteur (C), et sa borne de commande étant la base (B).

12. Circuit destiné à prévenir une perte de tension de batterie sur le côté sortie d'un convertisseur CC-CC embarqué selon la revendication 1, dans lequel le commutateur (Q_{OR}) est un transistor à effet de champ à métal-oxyde-semiconducteur de type N, sa première borne étant la source (S), sa seconde borne étant le drain (D), et sa borne de commande étant la grille (G).

13. Circuit destiné à prévenir une perte de tension de batterie sur le côté sortie d'un convertisseur CC-CC embarqué selon la revendication 3, dans lequel : l'autre commutateur (Q_{off}) est un transistor à effet de champ à effet de champ à métal-oxyde-semiconducteur de type N, sa première borne étant la source (S), sa seconde borne étant le drain (D), et sa borne de commande étant la grille (G).
